# FASCICULE DE BREVET EUROPEEN

(11) **EP 4 077 884 B1**
(45) Date de publication et mention de la délivrance du brevet: **12.06.2024**
(21) Numéro de dépôt: 20848713.2
(22) Date de dépôt: 17.12.2020
(51) Int. Cl.: F01D 5/14, F01D 5/28

(54) **AUBE DE SOUFFLANTE OU D'HELICE POUR UNE TURBOMACHINE D'AERONEF ET PROCÉDÉ DE FABRICATION**
FAN- ODER PROPELLERSCHAUFEL FÜR EINE FLUGZEUGTURBOMASCHINE UND HERSTELLUNGSVERFAHREN
FAN OR PROPELLER BLADE FOR AN AIRCRAFT TURBOMACHINE AND MANUFACTURING METHOD

(30) Priorité: 20.12.2019 FR 1915318
(43) Date de publication de la demande: 26.10.2022
(73) Titulaire: SAFRAN AIRCRAFT ENGINES, 75015 Paris (FR)
(72) Inventeur: COURTIER, Vivien Mickaël, 77550 MOISSY-CRAMAYEL (FR); FIXY, Teddy, 77550 MOISSY-CRAMAYEL (FR); POSTEC, Clément Pierre, 77550 MOISSY-CRAMAYEL (FR); SOURYAVONGSA, Eddy Keomorakott, 77550 MOISSY-CRAMAYEL (FR)
(74) Mandataire: Gevers & Orès
(86) Numéro de dépôt international: PCT/FR2020/052514
(87) Numéro de publication internationale: WO 2021/123652

(56) Documents cités:
- EP-A1- 1 526 285
- EP-A2- 2 500 263
- EP-B1- 1 526 285
- WO-A1-2013/160584
- WO-A1-2015/034630
- US-A1- 2013 039 774

## Description

### Domaine technique de l'invention

La présente invention se rapporte au domaine technique des turbomachines d'aéronefs, telles qu'un turboréacteur ou un turbopropulseur. Plus particulièrement, la présente invention concerne une aube de soufflante ou d'hélice pour une turbomachine et son procédé de fabrication

### Arrière-plan technique

L'état de la technique comprend notamment les documents US-A1-2013/039774 et EP-A2-2500263.

De façon connue, dans l'hypothèse d'une architecture carénée, une turbomachine d'aéronef comprend d'amont en aval, dans le sens d'écoulement des gaz, une soufflante, un compresseur basse pression, un compresseur haute pression, une chambre de combustion, une turbine haute pression et une turbine basse pression. Le rotor du compresseur basse pression est entraîné par le rotor de la turbine basse pression, et le rotor du compresseur haute pression est entraîné par le rotor de la turbine haute pression.

Une turbomachine comprend des aubes de rotor qui tournent à l'intérieur de carters. C'est par exemple le cas des aubes de soufflante d'une turbomachine qui sont entourées par un carter de rétention. Une telle aube présente classiquement un pied et une pale, le pied comportant des faces latérales reliées à la pale et destinées à former des portées d'appui dans un logement de montage d'un disque de rotor.

Une telle aube est conçue avec une bonne tenue mécanique et en réduisant le bruit émis par l'aube en fonctionnement, de façon à optimiser les performances aérodynamiques de la turbomachine.

De manière générale, pour améliorer les performances aérodynamiques, par exemple d'un module de soufflante et de ces aubes, le taux de dilution (ou « by-pass ratio », BPR en anglais) de la turbomachine est augmenté. Ceci entraine une augmentation du diamètre externe des aubes et de l'envergure de ces aubes. Ce dimensionnement important peut abaisser certains modes propres de ces aubes, notamment la fréquence propre des aubes en flexion. Les modes propres de ces aubes peuvent être rehaussés en augmentant fortement l'épaisseur des parois formant l'aube. Or, ceci peut alourdir considérablement l'aube et de façon générale l'encombrement de la turbomachine.

De façon similaire, cette démonstration sur le dimensionnement en épaisseur de la soufflante reste valable dans le cas des architectures carénées (aube de soufflante) ou non carénées (aube d'hélice), des architectures avec ou sans réducteur mécanique, ou des configurations type « puller » (dans laquelle l'aube d'hélice est placée à l'avant de la turbomachine) ou type « pusher » (dans laquelle l'aube d'hélice est placée à l'arrière de la turbomachine).

De manière générale, la surface externe de la pale (ou dit autrement une peau) de l'aube de grande corde travaille mécaniquement plus que la partie centrale de la pale. Ainsi, il peut être envisagé de réaliser une aube dite « creuse » dont la partie centrale de la pale peut être constituée en matériau plus léger (par exemple en mousse), de façon à optimiser la masse totale de l'aube. Cependant, cette partie centrale ne présente pas de rigidité structurale, lors de sollicitation extrême en fonctionnement (par exemple une ingestion de particules solides), l'intégrité de l'aube peut ainsi être fortement altérée.

La présente invention propose une solution simple, efficace et économique à ce problème.

### Résumé de l'invention

L'invention propose une aube de soufflante ou d'hélice pour une turbomachine d'aéronef, l'aube étant en matériau composite et comportant une pale et un pied, le pied étant formé par une extrémité longitudinale d'un longeron qui est formé par un renfort fibreux formé de fils tissés en trois dimensions et dont une portion s'étend à l'intérieur de la pale, ladite pale ayant un profil aérodynamique définie par une peau formée de fils tissées et entourant ladite portion du longeron, le longeron et la peau étant noyées dans une résine polymérisée. Ladite portion du longeron comprend des raidisseurs longitudinaux en saillie qui délimitent entre eux des espaces de logement d'inserts longitudinaux formés en matériau alvéolaire.

Les raidisseurs longitudinaux de l'invention, étant formés de fils tissés de manière similaire à la peau de pale à profil aérodynamique, permettent d'assurer une transmission efficace et homogène des efforts entre la peau et le longeron sans zone de concentration de contraintes ou de déformations. Ainsi, l'aube de l'invention, notamment à grande corde, présente à la fois une masse globale allégée, par la présence d'inserts longitudinaux en matériau alvéolaire, et une résistance mécanique renforcée par la présence des raidisseurs longitudinaux en matériau composite (renfort fibreux densifié par une résine). En effet, la rigidité de l'aube est renforcée vis-à-vis des chocs ou impacts, pour résister aux efforts d'une ingestion d'oiseaux par exemple. L'aube selon l'invention peut comprendre une ou plusieurs des caractéristiques suivantes, prises isolément les unes des autres ou en combinaison les unes avec les autres :
- chacun des raidisseurs est formé par une déliaison de fils du longeron ; en effet, après chaque déliaisons, notamment de fils de chaîne du longeron, une augmentation de l'épaisseur de tissage des fils de trame est réalisée pour former une surépaisseur au niveau de cette déliaison. Chaque déliaison et surépaisseur permettent ainsi de former un raidisseur tissé en 3D.
- l'épaisseur transversale du longeron décroit du pied vers l'extrémité opposée du longeron ;
- la peau comprend une déliaison séparant au moins partiellement des parois intrados et extrados de la pale, en particulier au niveau d'un bord de fuite de la peau ;
- les raidisseurs sont disposés sur une face intrados ou une face extrados de la portion du longeron ;
- le longeron comprend entre deux et douze raidisseurs espacés les uns des autres ;
- chaque raidisseur a une épaisseur variable, en particulier entre 2 et 5 mm ;
- l'extrémité formant le pied s'étend à l'extérieur de la peau ;
- l'aube comprend un élément de protection sur un des bords de la pale, tel qu'un film de polyuréthane thermoplastique ;
- le matériau alvéolaire des inserts longitudinaux est choisi parmi une mousse polymère de type Rohacell^{®}, une mousse d'aluminium, un nida métallique et/ou un polymère de type Nomex^{®}.

L'invention concerne également un procédé de fabrication d'une aube selon une des particularités de l'invention, le procédé comprenant les étapes consistant à :
a) réaliser une première préforme fibreuse, dite « préforme de longeron », par tissage tridimensionnel de fils ; ladite préforme de longeron comprenant à la fois une extrémité longitudinale configurée pour former un pied d'aube et une portion configurée pour s'insérer à l'intérieur d'une pale d'aube ;
b) réaliser une seconde préforme fibreuse, dite « préforme de peau » par tissage ou tressage tridimensionnel de fils, ladite préforme de peau étant configurée pour former un profil aérodynamique ;
e) disposer la préforme de longeron à l'intérieur de la préforme de peau ;
f) positionner lesdites préformes dans un moule, puis injecter une résine thermodurcissable pour obtenir l'aube.

Conformément à l'invention, le procédé comprend, avant les étapes e) et f), les étapes consistant à :
a2) former à l'étape a) plusieurs raidisseurs longitudinaux sur ladite portion du longeron, et délimiter entre lesdits raidisseurs des espaces,
c) réaliser des inserts longitudinaux en matériau alvéolaire ;
d) introduire lesdits inserts dans lesdits espaces correspondant de la préforme longeron.

Avantageusement, à l'étape a2) lesdits raidisseurs sont formés par des déliaisons de fils de chaîne et par des augmentations de fils de trame au niveau desdites déliaisons de fils.

De préférence, après l'étape f), le procédé comprend une étape g) de détourage de l'aube pour former son contour définitif et/ou une étape h) de collage d'un renfort sur un des bords de la pale pour former un bord de fuite et/ ou un bord d'attaque de l'aube.

En particulier, l'étape b) du procédé comprend une sous-étape b2) réalisant une déliaison des fils de chaîne, tel qu'au niveau du côté d'un bord de fuite de la préforme de peau.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig. 1] la figure 1 est une vue schématique de face d'une aube de soufflante selon l'invention ;
[Fig. 2] la figure 2 est une vue schématique en coupe suivant un plan vertical B de l'aube de la figure 1 ;
[Fig. 3A] la figure 3A est une vue schématique en coupe axiale suivant un plan horizontal A de l'aube de la figure 1 comprenant des raidisseurs selon un premier mode de réalisation ;
[Fig. 3B] la figure 3B est une vue schématique en coupe axiale suivant le plan A de l'aube de la figure 1 comprenant des raidisseurs selon un second mode de réalisation ;
[Fig. 4] la figure 4 indique des étapes successives d'un procédé de fabrication de l'aube de la figure 1 selon l'invention ; et [Fig. 5] la figure 5 est une vue schématique de face d'une préforme de longeron selon une des étapes de fabrication de la figure 4 ;
[Fig. 6a] la figure 6a est une vue schématique en coupe axiale d'une préforme de longeron suivant un plan horizontal D de la figure 5, dans lequel les raidisseurs sont pliés ;
[Fig. 6b] la figure 6b est une vue schématique en coupe axiale de la figure 6a dans lequel les raidisseurs sont dépliés ;
[Fig. 7] la figure 7 est vue schématique en coupe suivant un plan vertical C de la préforme de longeron de la figure 5.

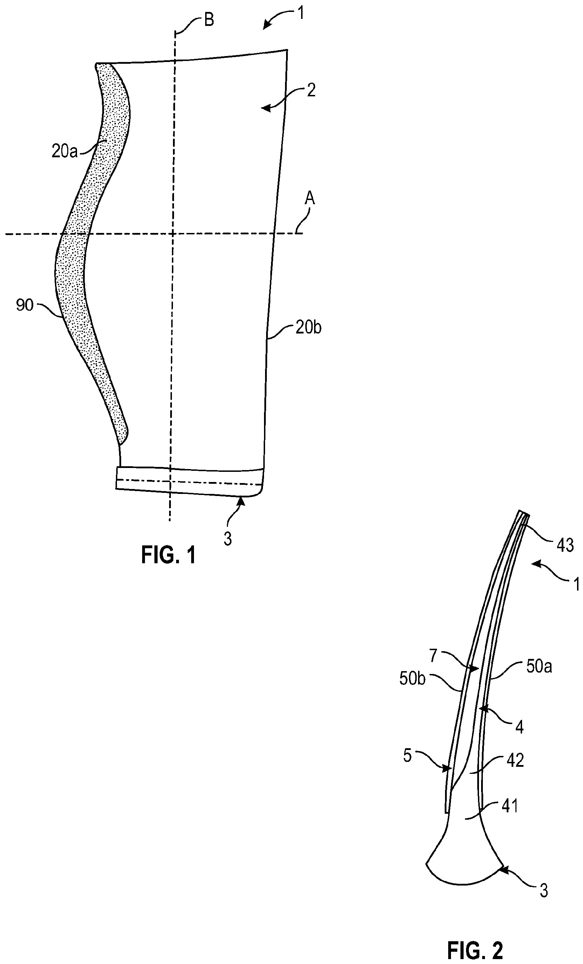

Sur les figures de la présente demande, le terme « longitudinal » définit une extension dans la direction de l'axe ou le plan B figure 1. Le terme « axial » définit une extension dans la direction de l'axe ou plan A figure 1. Le terme « transversal » définit une extension dans la direction orthogonale à l'axe A et l'axe B figure 1.

### Description détaillée de l'invention

L'invention s'applique d'une manière générale à différents types d'aube de soufflante ou d'hélice utilisés dans des turbomachines d'aéronef, telles qu'un turboréacteur ou un turbopropulseur d'aéronef. L'invention trouve une application avantageuse mais non exclusive dans des aubes de grandes dimensions qui, en raison de leur taille, présentent une masse importante ayant un impact significatif sur la masse globale de la turbomachine.

De façon classique, dans l'hypothèse d'une architecture carénée, une turbomachine comprend d'amont en aval, c'est-à-dire dans le sens d'écoulement des flux de gaz, une soufflante, un ou plusieurs compresseurs, une chambre de combustion, une ou plusieurs turbines, et une tuyère d'éjection des gaz de combustion sortant de la ou des turbines.

La figure 1 représente une aube de soufflante 1 destinée à être montée sur une turbomachine qui comprend une pale 2 ayant une structure à profil aérodynamique destinée à former la partie aérodynamique de l'aube, un pied 3 formé par une partie de plus grande épaisseur, par exemple à section en forme de bulbe. La pale 2 à profil aérodynamique présente suivant un axe A, un profil incurvé d'épaisseur variable entre son bord d'attaque 20a et son bord de fuite 20b.

Comme illustré sur la figure 2, la pale 2 comprend une paroi intrados 50a et une paroi extrados 50b, ces deux parois 50a, 50b formant une peau 5 externe de l'aube. Une telle peau 5 de pale peut être formée de filaments tissés et imprégnés d'une résine thermodurcissable. Un élément de protection 90 peut être rajouté dans la région du bord d'attaque 20a et/ou du bord de fuite 20b de la pale. L'élément de protection 90 peut être un film de polyuréthane thermoplastique.

Par ailleurs, ces parois 50a, 50b sont espacées l'une de l'autre par un longeron 4. Le longeron 4 comprend une extrémité longitudinale 41 s'étendant à l'extérieur de la peau 5 et formant le pied 3 d'aube, et une portion 42 disposée à l'intérieur de la peau 5 de pale. L'épaisseur du longeron 4 peut décroitre de l'extrémité 41 du pied vers une extrémité 43 opposée du longeron (c'est à dire dans le sens de l'envergure de l'aube). Cette épaisseur est mesurée dans une direction transversale (lorsque les raidisseurs ne sont pas dépliées) par rapport à l'axe longitudinal 8 de l'aube (figure 1). Cette extrémité 43 est disposée au sommet de la pale 2 d'aube. Un tel longeron peut être obtenue par une préforme fibreuse formé de fils tissés en trois dimensions (3D). De même, la peau 5 peut être obtenue par des fils tissés en trois dimensions.

L'une des particularités de l'invention réside dans le fait que la portion 42 du longeron comprend des raidisseurs 6 sensiblement longitudinaux en saillie qui délimitent entre eux des espaces 8 de logement pour des inserts 7 longitudinaux.

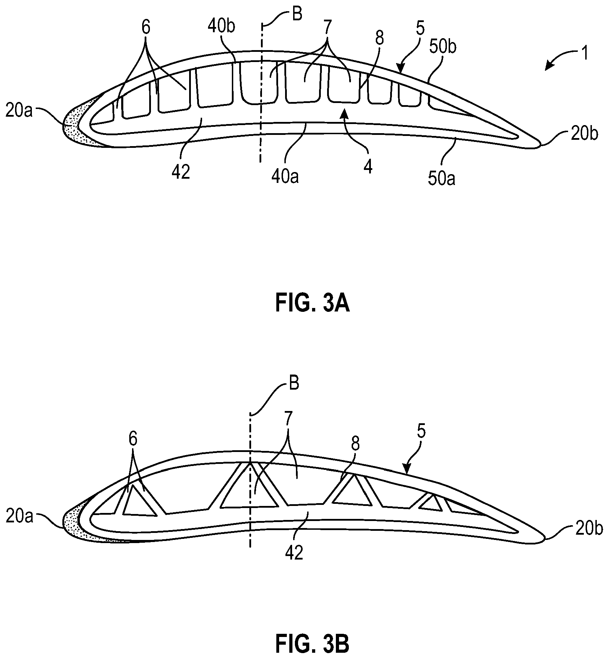

Les figures 3A et 3B illustrent deux exemples non limitatifs, d'inserts 6 assemblés dans les espaces 8 de logement formés entre les raidisseurs 6 du longeron. Les espaces 8 de logement de l'aube peuvent présenter des formes géométriques différentes suivant la disposition des raidisseurs 6 à l'intérieur de la pale. Les raidisseurs 6 de la figure 3A s'étendent sensiblement parallèlement à l'axe B. Les raidisseurs de la figure 3B sont inclinées, de façon à former des espaces 8 de formes triangulaire et trapézoïdale en coupe axiale.

Sur les exemples, les raidisseurs 6 sont disposés sur une face intrados 40a du longeron 4. En variante, les raidisseurs 6 peuvent également disposés sur une face extrados 40b ou sur les deux faces 40a, 40b du longeron 4 selon l'application souhaitée.

Les raidisseurs 6 peuvent être au nombre de deux à douze par longeron 4. Les raidisseurs 6 sont espacés les uns des autres, par exemple de façon régulière (figure 3A) ou aléatoire (figure 3B).

Chaque raidisseur 6 a une épaisseur variable par longeron 4. Par exemple, le raidisseur 6 peut avoir une épaisseur comprise entre 2 et 5 mm, de préférence entre 3 et 4,5 mm. L'épaisseur est mesurée dans une direction parallèle à l'axe A, perpendiculaire à l'axe B de l'aube (figure 1).

La peau 5 de la pale peut présenter une épaisseur comprise entre 2 et 5 mm, de préférence entre 3 et 4,5 mm.

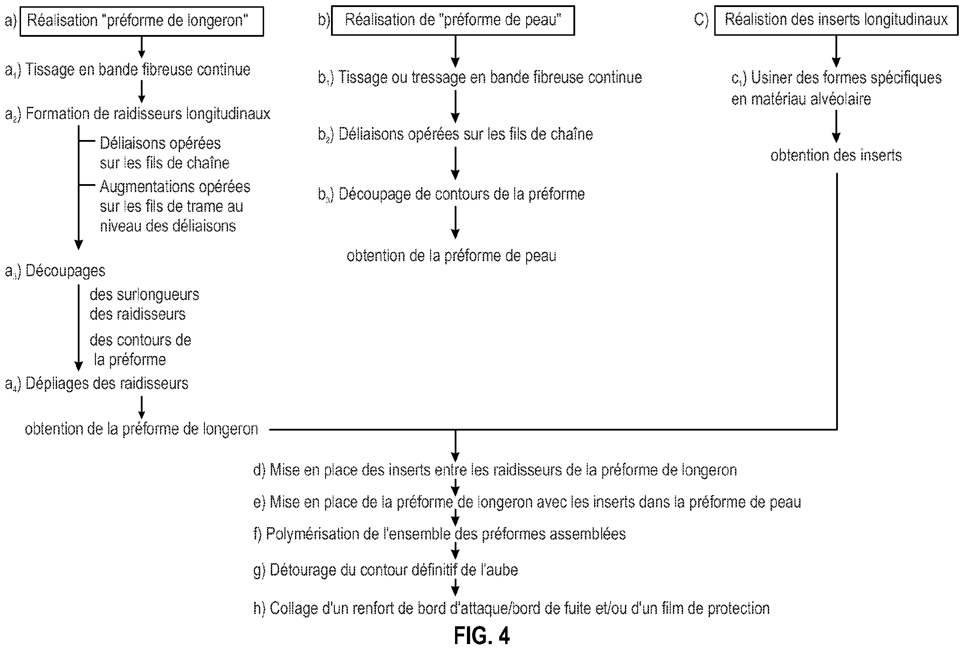

Des étapes successives d'un procédé de fabrication de l'aube 1 sont par exemple résumés sur la figure 4.

Dans une étape a), une préforme fibreuse 400 de longeron est obtenue par tissage 3D.

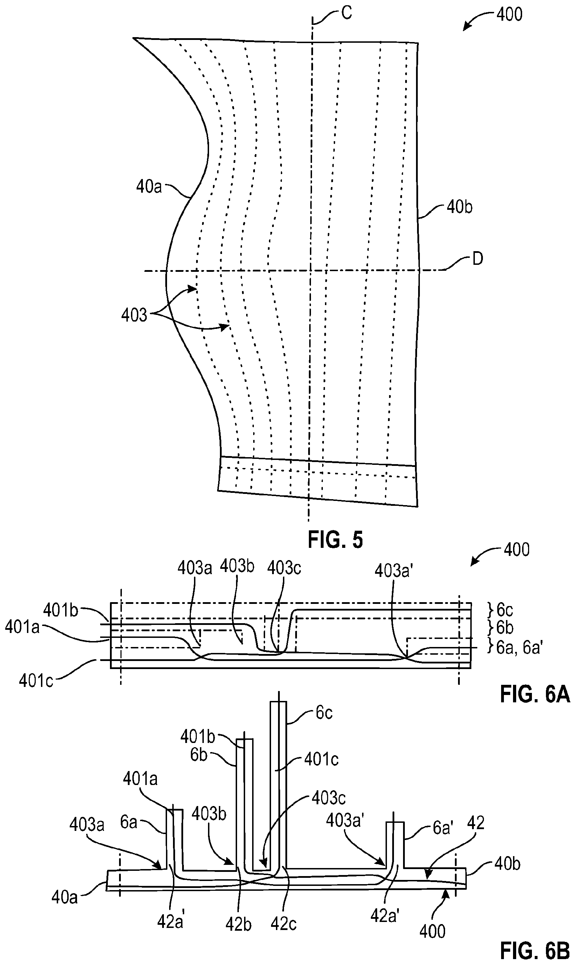

Les figures 5 à 7 montrent très schématiquement la préforme fibreuse 400 destinée à former le longeron 4 de l'aube 1.

Dans une étape a1), un tissage 3D en bande fibreuse continue est réalisé pour former la portion 42 de la préforme de longeron. Cette portion 42 peut être d'épaisseur constante ou variable.

Le tissage 3D de la préforme 400 de longeron est obtenu au moyen d'un métier à tisser de type jacquard sur lequel on a disposé un faisceau de fils de chaînes ou torons en une pluralité de couches superposées de plusieurs centaines de fils chacune (non représentés sur les figures), les fils de chaînes étant liés par des fils de trame 401 (figures 6a et 6b). De manière générale, les fils de chaîne sont disposés perpendiculairement aux fils de trame.

Dans l'exemple illustré, le tissage 3D est un tissage à armure "interlock". Par tissage "interlock", on entend ici une armure de tissage dans laquelle chaque couche de fils de trame lie plusieurs couches de fils de chaîne avec tous les fils d'une même colonne de trame ayant le même mouvement dans le plan de l'armure.

D'autres types de tissage 3D connus pourront être utilisés, comme notamment ceux décrits dans le document WO-A2-2006/136755 de la demanderesse. Ce document décrit notamment la réalisation par tissage en une seule pièce de structures fibreuses de renfort pour des pièces telles que des aubes ayant un premier type d'armure à coeur et un deuxième type d'armure en peau qui permettent de conférer à la fois les propriétés mécaniques et aérodynamiques attendues pour ce type de pièce.

La préforme 400 selon l'invention peut être tissée à partir de fils de fibre de carbone

Au fur et à mesure du tissage de la préforme 400 dont l'épaisseur et la largeur varient, un certain nombre de fils de chaîne ne sont pas tissés, ce qui permet de définir le contour et l'épaisseur voulue, continûment variable, de la préforme 400. Un exemple de tissage 3D évolutif permettant notamment de faire varier l'épaisseur de la préforme entre un premier bord destiné à former le bord d'attaque et un deuxième bord d'une épaisseur moindre et destiné à former le bord de fuite est décrit dans le document EP-A1 -1 526 285 de la demanderesse.

Plus particulièrement, dans une étape a2) du tissage, des déliaisons 403 sont réalisées à l'intérieur de la préforme 400 entre des couches successives de fils de chaîne. Par déliaison, on entend ici une zone qui n'est pas traversée par des fils de trame liant entre eux des couches successives de fils de chaîne. Hormis au niveau de la déliaison, les couches de fils de chaîne sont liées entre elles par des fils de trame d'une ou une pluralité de fils de trame.

Les déliaisons 403 des fils de chaîne permettent, d'une part, de former les raidisseurs 6 du longeron, et d'autre part de ménager des espaces 8 entre ces raidisseurs 6. Ces espaces 8 sont configurés pour recevoir des inserts 7 à l'intérieur de la pale d'aube.

Plus particulièrement, la préforme de longeron est tissée à plat dans laquelle après chaque déliaison de fils de chaîne, une augmentation de l'épaisseur de tissage des fils de trame est réalisée, pour former une surépaisseur au niveau de cette déliaison. Par augmentation, on entend ici une zone localisée qui est pas traversée par des fils de trame liant entre eux des couches successives de fils de chaîne. Chaque déliaison et surépaisseur permet ainsi de former un raidisseur tissé en 3D.

A la fin du tissage 3D, on sectionne dans une étape a3), les fils de chaîne et de trame à la limite de la masse tissée pour extraire la préforme de longeron représentée sur les figures 5 et 6a, telle qu'elle est issue du tissage 3D. Par exemple, les surlongueurs des raidisseurs et/ou des contours de la préforme de longeron (par exemple les bords d'attaque/de fuite), sont découpés au jet d'eau sous pression

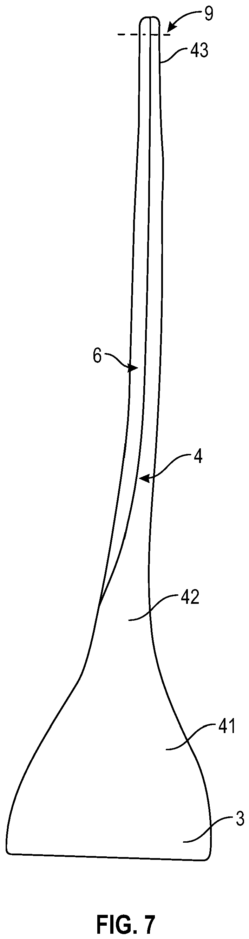

Dans une étape a4), les déliaisons de fils permettent de déplier les surépaisseurs et ainsi faire apparaître les raidisseurs sur la préforme de longeron représentée sur les figures 6b et 7.

On notera qu'un ensemble de raidisseurs par longeron peut être formé par différent mode de tissage 3D, notamment selon le choix d'entrelacement des fils de chaîne et de trame, le nombre et la position des raidisseurs, afin de renforcer la tenue mécanique des raidisseurs avec la portion du longeron par rapport à la dimension souhaitée de l'aube.

On notera qu'il existe plusieurs possibilités de tissage des cheminements des torons par rapport aux fils de trame pour réaliser la portion 42 et les raidisseurs 6 de la préforme de longeron. Parmi les possibilités de tissage 3D, le cheminement de tissage des fils de trame par rapport aux torons peuvent être soit en entrant par un raidisseur pour passer dans la portion de la préforme de longeron et en sortir, soit en entrant par la portion de la préforme de longeron puis en sortant par un raidisseur ou en entrant par un raidisseur et en sortant par un autre raidisseur après un passage dans la portion de la préforme de longeron. Ceci permet de proposer des aubes intégrant des raidisseurs variables en fonction de la dimension et de la rigidité souhaitées pour l'aube.

Par exemple, si tous les fils de trame entrent par la portion du longeron, notamment du côté du bord d'attaque de la préforme de longeron, puis sortent par les raidisseurs, la proportion de fils de trame diminue vers le bord de fuite de la préforme. A l'inverse, si tous les fils de trame entrent par les raidisseurs et passent par la portion de la préforme de longeron, la proportion de fils de trame augmente vers le bord de fuite de la préforme.

Un mode de tissage 3D, non exclusif, à armure interlock de la préforme 400 est montré très schématiquement sur les figures 6a et 6b. En particulier, quatre types de raidisseurs 6a, 6b, 6c, 6a' formés par des déliaisons 403a, 403b, 403c, 403a' des fils de chaîne dans la préforme 400 de longeron sont illustrés par les figures 6a et 6b. La figure 6a représente les raidisseurs tissés et non dépliés, alors que la figure 6b représente ces raidisseurs dépliés. Dans l'exemple illustré, différents fils de trame lient des fils de chaîne pour former la portion 42 du longeron, qui a une épaisseur constante dans le sens de la corde, puis des déliaisons 403a, 403b, 403c, 403a' des fils de chaîne sont réalisées au niveau de quatre zones de la portion 42. Au niveau de chaque déliaison, des augmentations d'épaisseur sont réalisées par un fils de trame 401a, 401b, 401c liant des fils de chaîne des couches de fils de chaîne dans la portion 42a, 42b, 42c, 42a' de la portion 42 de longeron adjacente à la déliaison 403a, 403b, 403c, 403a'. En particulier, deux raidisseurs 6a, 6a' sont tissés par un premier fil de trame 401a entrant par le raidisseur 6a pour passer dans la portion 42 et sortir par le raidisseur 6a' (ou inversement). Pour cela, des fils de chaîne sont ajoutés au niveau d'une des déliaisons 403a, 403a' pour que le fil de trame 401a puisse lier ces fils de chaîne avec les fils de chaîne des couches de fils de chaîne de la portion 42a, 42a' du longeron, et réaliser les augmentations de tissage 3D. Puis, le raidisseur 6b est tissé par un second fil de trame 401b entrant par le raidisseur 6b pour passer dans la portion 42 et sortir par le bord de fuite 40b de la préforme de longeron. Pour cela, des fils de chaîne sont également ajoutés au niveau de la déliaison 403b pour que le fil de trame 401b puisse lier ces fils de chaîne avec les fils de chaîne des couches de fils de chaîne de la portion 42b du longeron. Selon l'exemple illustré, le raidisseur 6c est tissé par un troisième fil de trame 401c entrant par le bord d'attaque 40a de la préforme de longeron pour passer par la portion 42 et sortir par le raidisseur 6c. Pour cela, le fil de trame 401c lie les fils de chaîne des couches de fils de chaîne de la portion 42c du longeron pour réaliser les augmentations de tissage au niveau de la déliaison 403c.

La figure 7 illustre la préforme de longeron 400 en vue de face s'étendant radialement de l'extrémité 41, en passant par la portion 42, vers l'extrémité 43 opposée du longeron. Par ailleurs, la préforme 400 comprend un pied 3 d'aube rapporté sur l'extrémité 41 de la préforme de longeron, et une tête 9 d'aube rapportée sur l'extrémité 43 opposée de la préforme de longeron.

Une étape b) du procédé de fabrication permet de réaliser une préforme fibreuse de peau (non représenté séparément sur les figures) qui est destinée à former le profil aérodynamique de la pale d'aube.

De même que pour la préforme 400 de longeron décrite ci-avant, la préforme de peau peut être obtenue par tissage 3D réalisé au moyen d'un métier à tisser de type jacquard sur lequel on a disposé un faisceau de fils de chaînes en une pluralité de couches de plusieurs centaines de fils chacune, les fils de chaînes étant liés par des fils de trame.

Dans une étape b1), un tissage 3D en bande fibreuse continue est réalisé pour former la préforme de peau.

Dans une étape b2), une déliaison des fils de chaîne peut être réalisée, par exemple au niveau du côté du bord de fuite de la préforme de peau, de façon à séparer partiellement les parois intrados 50a et extrados 50b de la préforme de peau. Cette déliaison permet notamment de faciliter l'introduction de la portion 42 de la préforme de longeron 400 à l'intérieur de cette préforme de peau.

A la fin du tissage 3D, les fils de chaîne et de trame sont coupés dans une étape b3), par exemple au jet d'eau sous pression, à la limite de la masse tissée pour extraire la préforme de peau souhaitée.

Avant la mise en forme de l'aube, des inserts longitudinaux 7 sont réalisés dans une étape c). Ces inserts 7 sont configurés pour s'assembler dans les espaces 8 de logement de la préforme 400 de longeron.

A l'étape c1), des inserts 7 peuvent être usinés pour avoir des formes adaptées aux formes des espaces 8 de la préforme 400. Ces inserts 7 peuvent être réalisés soit directement par des moules ayant les formes des espace 8 de logement, soit par des moules de forme classique puis ces inserts sont découpés avec les formes correspondants aux espaces 8 de logement. Les inserts peuvent être en matériau alvéolaire de façon à ne pas augmenter significativement la masse globale de l'aube. Ce matériau alvéolaire peut être non structuré (telles qu'une mousse polymère de type Rohacell^{®}, une mousse d'aluminium, etc.) ou architecturé (tel qu'un nida métallique ou un polymère comme le Nomex^{®}). La forme et l'épaisseur des inserts sont choisies de manière à faciliter leur placement dans la préforme de longeron, sans endommager la préforme de longeron et sans modifier la surface aérodynamique finale de la pale d'aube.

Dans une étape d), les inserts 7 sont disposés dans les espace 8 de logement de la préforme 400 de longeron. De préférence, cette étape d) est effectuée manuellement par un opérateur. Des traceurs peuvent être utilisés pour pouvoir guider et contrôler le bon positionnement des inserts dans les espaces de logement de la préforme de longeron sans modifier la surface aérodynamique de la peau d'aube.

Dans une étape e), la préforme de longeron 400 intégrant les inserts longitudinaux 7 est assemblée à l'intérieur de la préforme de peau, par exemple dans une cavité formée par la déliaison des fils de la préforme de peau.

Une fois la portion 42 de la préforme de longeron 400 disposée dans la préforme de peau, on procède à une polymérisation (ou densification) de la préforme fibreuse ainsi constituée dans une étape f). Le bord de fuite 20b de la préforme de peau, qui est séparé par une déliaison, est de préférence refermé par couture avant la polymérisation.

La polymérisation de la préforme fibreuse peut être réalisée en une seule opération, c'est-à-dire en polymérisant en même temps les préforme de longeron et de peau, une fois assemblées. Dans ce cas, ces préformes sont densifiées avec une même résine (ou matrice) de polymérisation.

Selon une variante de réalisation de l'invention, la préforme de longeron peut être polymérisée seule avec une première résine puis être introduite dans la préforme de peau comme décrit ci-avant, la préforme de peau étant alors polymérisée avec une deuxième résine qui peut-être de nature différente de celle de la première résine.

Par ailleurs, les préformes de longeron et de peau peuvent être réalisées avec des fils constitués de fibres de même nature ou de nature différente. La polymérisation de la préforme fibreuse consiste à combler la porosité de la préforme, dans tout ou partie du volume de celle-ci, par le matériau constitutif de la résine.

La résine du matériau composite constituant la pale peut être obtenue par la technique de moulage par transfert de résine dit RTM ("Resin Transfert Moulding" en anglais). Conformément à la technique RTM, on place la préforme de longeron avec les inserts disposés à l'intérieur de la préforme de peau, comme expliqué précédemment, dans un moule présentant la forme extérieure de la pale à profil aérodynamique. Le moule comprenant les préformes assemblées est placé dans une étuve. Une résine thermodurcissable est alors injectée dans le moule. Les résines adaptées pour les techniques RTM sont bien connues, par exemple une résine époxy. Elles présentent de préférence une faible viscosité pour faciliter leur injection dans les fibres. Le choix de la température de l'étuve et/ou la nature chimique de la résine est déterminé en fonction des sollicitations thermomécaniques auxquelles doit être soumise l'aube. Une fois la résine injectée dans tout le renfort fibreux des préformes, on procède à sa polymérisation par traitement thermique conformément à la technique RTM. Après l'injection et la polymérisation, l'aube est démoulée.

Dans une étape g), l'aube est détourée pour enlever l'excès de résine et former les contours définitifs de l'aube.

Enfin, dans une étape h), un renfort de bord d'attaque et/ou de bord de fuite peut être collé sur les bords correspondants de l'aube. Un élément de protection 90 peut être collé sur l'aube, par exemple un film de polyuréthane thermoplastique.

Les différentes étapes décrites ci-avant permet d'obtenir une aube de soufflante 1 telle que représentée sur les figures 1 et 2. Cette aube 1 comprend ainsi une pale 2 avec un profil aérodynamique en matériau composite (renfort fibreux densifié par une matrice), un longeron 4 avec des raidisseurs également en matériau composite (renfort fibreux densifié par une matrice) et des inserts en matériau alvéolaire.

L'invention n'est toutefois pas limitée à des aubes de soufflante d'une turbomachine et peut être appliquée à d'autres aubes carénées (soufflante) ou non carénées (hélice) et aubes mobiles (rotor) ou fixes (stator) d'une turbomachine. L'aube de la présente divulgation peut également être appliquée dans le domaine des éoliennes ou hydroliennes et dans le domaine de l'énergie renouvelable.

## Revendications

1. Aube de soufflante ou d'hélice (1) pour une turbomachine d'aéronef, l'aube étant en matériau composite et comportant une pale (2) et un pied (3), le pied (3) étant formé par une extrémité (41) longitudinale d'un longeron (4) qui est formé par un renfort fibreux formé de fils tissés en trois dimensions et dont une portion (42) s'étend à l'intérieur de la pale (2), ladite pale (2) ayant un profil aérodynamique définie par une peau (5) formée de fils tissées et entourant ladite portion (42) du longeron, le longeron (4) et la peau (5) étant noyées dans une résine polymérisée, **caractérisée en ce que** ladite portion (42) du longeron comprend des raidisseurs (6) longitudinaux en saillie qui délimitent entre eux des espaces (8) de logement d'inserts (7) longitudinaux formés en matériau alvéolaire.

2. Aube selon la revendication 1, **caractérisée en ce que** chacun des raidisseurs (6) est formé par une déliaison (403) de fils du longeron (4).

3. Aube selon la revendication 1 ou 2, **caractérisée en ce que** l'épaisseur transversale du longeron (4) décroit du pied (3) vers l'extrémité (43) opposée du longeron.

4. Aube selon l'une des revendications 1 à 3, **caractérisée en ce que** la peau (5) comprend une déliaison séparant au moins partiellement des parois intrados (50a) et extrados (50b) de la pale, en particulier au niveau d'un bord de fuite (20b) de la peau.

5. Aube selon l'une des revendications 1 à 4, **caractérisée en ce que** les raidisseurs (6) sont disposés sur une face intrados (40a) ou une face extrados (40b) de la portion (42) du longeron.

6. Aube selon l'une des revendications 1 à 5, **caractérisée en ce que** le longeron (4) comprend entre deux et douze raidisseurs (6) espacés les uns des autres.

7. Aube selon l'une des revendications 1 à 6, **caractérisée en ce que** chaque raidisseur (6) a une épaisseur variable, en particulier entre 2 et 5 mm.

8. Aube selon l'une des revendications 1 à 7, **caractérisée en ce que** l'extrémité (41) formant le pied (3) s'étend à l'extérieur de la peau (5).

9. Aube selon l'une des revendications 1 à 8, **caractérisée en ce que** l'aube comprend un élément de protection (90) sur un des bords (20a, 20b) de la pale (2), tel qu'un film de polyuréthane thermoplastique.

10. Aube selon l'une des revendications 1 à 9, **caractérisé en ce que** le matériau alvéolaire des inserts longitudinaux (7) est une mousse d'aluminium ou un nida métallique.

11. Procédé de fabrication d'une aube (1) selon une des revendications précédentes, le procédé comprenant les étapes consistant à :
a) réaliser une première préforme fibreuse, dite « préforme de longeron » (400), par tissage tridimensionnel de fils ; ladite préforme (400) comprenant à la fois une extrémité (41) longitudinale configurée pour former un pied (3) d'aube et une portion (42) configurée pour s'insérer à l'intérieur d'une pale (2) d'aube ;
b) réaliser une seconde préforme fibreuse, dite « préforme de peau » par tissage ou tressage tridimensionnel de fils ; ladite préforme de peau étant configurée pour former un profil aérodynamique ;
e) disposer la préforme de longeron (400) à l'intérieur de la préforme de peau ;
f) positionner lesdites préformes dans un moule, puis injecter une résine thermodurcissable pour obtenir l'aube (1) ;
**caractérisé en ce que** le procédé comprend, avant les étapes e) et f), les étapes consistant à :
a2) former à l'étape a) plusieurs raidisseurs (6) longitudinaux sur ladite portion (42) du longeron, et délimiter entre les raidisseurs (6) des espaces (8),
c) réaliser des inserts (7) longitudinaux en matériau alvéolaire, et d) introduire lesdits inserts (7) dans lesdits espaces (8) correspondant de la préforme longeron (400).

12. Procédé selon la revendication 11, **caractérisé en ce que** à l'étape a2), lesdits raidisseurs (6) sont formés par des déliaisons (403) de fils de chaîne et par des augmentations de fils de trame au niveau desdites déliaisons de fils.

13. Procédé selon la revendication 11 ou 12, **caractérisé en ce que** à après l'étape f), le procédé comprend une étape g) de détourage de l'aube pour former son contour définitif et/ou une étape h) de collage d'un renfort sur un des bords de la pale pour former un bord de fuite (20a) et/ ou un bord d'attaque (20b) de l'aube.

14. Procédé selon l'une des revendications 11 à 13, **caractérisé en ce que** que l'étape b) du procédé comprend une sous-étape b2) réalisant une déliaison des fils de chaîne, tel qu'au niveau du côté d'un bord de fuite de la préforme de peau.

## Patentansprüche

1. Gebläse- oder Propellerschaufel (1) für eine Turbomaschine eines Luftfahrzeugs, wobei die Schaufel aus Verbundwerkstoff besteht und ein Blatt (2) und einen Fuß (3) umfasst, wobei der Fuß (3) durch ein längliches Ende (41) eines Längsträgers (4) gebildet wird, der durch eine Faserverstärkung gebildet wird, die aus dreidimensional gewebten Fäden gebildet wird und von der sich ein Abschnitt (42) in das Innere des Blattes (2) erstreckt, wobei das Blatt (2) ein aerodynamisches Profil aufweist, das durch eine Haut (5) definiert wird, die aus gewebten Fäden gebildet wird und den Abschnitt (42) des Längsträgers umgibt, wobei der Längsträger (4) und die Haut (5) in ein polymerisiertes Harz eingebettet sind, **dadurch gekennzeichnet, dass** der Abschnitt (42) des Längsträgers längliche vorstehende Versteifungen (6) umfasst, die zwischen sich Räume (8) zur Aufnahme von länglichen Einsätzen (7) begrenzen, die aus geschäumtem Material gebildet werden.

2. Schaufel nach Anspruch 1, **dadurch gekennzeichnet, dass** jede der Versteifungen (6) durch eine Entbindung (403) von Fäden des Längsträgers (4) gebildet wird.

3. Schaufel nach Anspruch 1 oder 2, **dadurch gekennzeichnet, dass** die Querschnittsdicke des Längsträgers (4) vom Fuß (3) zum gegenüberliegenden Ende (43) des Längsträgers hin abnimmt.

4. Schaufel nach einem der Ansprüche 1 bis 3, **dadurch gekennzeichnet, dass** die Haut (5) eine Entbindung umfasst, die zumindest teilweise eine Druckseite Wand (50a) und eine Saugseite Wand (50b) des Blattes trennt, insbesondere im Bereich einer Hinterkante (20b) der Haut.

5. Schaufel nach einem der Ansprüche 1 bis 4, **dadurch gekennzeichnet, dass** die Versteifungen (6) auf einer Druckseite Fläche (40a) oder einer Saugseite Fläche (40b) des Abschnitts (42) des Längsträgers angeordnet sind.

6. Schaufel nach einem der Ansprüche 1 bis 5, **dadurch gekennzeichnet, dass** der Längsträger (4) zwischen zwei und zwölf voneinander beabstandete Versteifungen (6) umfasst.

7. Schaufel nach einem der Ansprüche 1 bis 6, **dadurch gekennzeichnet, dass** jede Versteifung (6) eine variable Dicke aufweist, insbesondere zwischen 2 und 5 mm.

8. Schaufel nach einem der Ansprüche 1 bis 7, **dadurch gekennzeichnet, dass** das Ende (41), das den Fuß (3) bildet, sich außerhalb der Haut (5) erstreckt.

9. Schaufel nach einem der Ansprüche 1 bis 8, **dadurch gekennzeichnet, dass** die Schaufel auf einem der Ränder (20a, 20b) des Blattes (2) ein Schutzelement (90) umfasst, wie beispielsweise einen thermoplastischen Polyurethanfilm.

10. Schaufel nach einem der Ansprüche 1 bis 9, **dadurch gekennzeichnet, dass** das geschäumte Material der länglichen Einsätze (7) ein Aluminiumschaum oder ein metallisches Nida ist.

11. Verfahren zur Herstellung einer Schaufel (1) nach einem der vorstehenden Ansprüche, wobei das Verfahren die Schritte umfasst, bestehend aus:
a) Herstellen einer ersten faserigen Vorform, genannt "Längsträgervorform" (400), durch dreidimensionales Verweben von Fäden; wobei die Vorform (400) sowohl ein längliches Ende (41) umfasst, das dazu konfiguriert ist, einen Schaufelfuß (3) zu bilden, als auch einen Abschnitt (42), der dazu konfiguriert ist, in das Innere eines Schaufelblattes (2) eingesetzt zu werden;
b) Herstellen einer zweiten faserigen Vorform, genannt "Hautvorform", durch dreidimensionales Weben oder Flechten von Fäden; wobei die Hautvorform dazu konfiguriert ist, ein aerodynamisches Profil zu bilden;
e) Anordnen der Längsträgervorform (400) im Inneren der Hautvorform;
f) Positionieren der Vorformen in einer Form und dann Einspritzen eines wärmehärtenden Harzes, um die Schaufel (1) zu erhalten;
**dadurch gekennzeichnet, dass** das Verfahren vor den Schritten e) und f) die Schritte umfasst, bestehend aus:
a2) Bilden in Schritt a) mehrerer länglicher Versteifungen (6) auf dem Abschnitt (42) des Längsträgers und Begrenzen von Räumen (8) zwischen den Versteifungen (6),
c) Herstellen von länglichen Einsätzen (7) aus geschäumtem Material, und d) Einführen der Einsätze (7) in die entsprechenden Räume (8) der Längsträgervorform (400).

12. Verfahren nach Anspruch 11, **dadurch gekennzeichnet, dass** in Schritt a2) die Versteifungen (6) durch Entbindungen (403) von Kettfäden und durch Erhöhungen von Schussfäden im Bereich der Fadenentbindungen gebildet werden.

13. Verfahren nach Anspruch 11 oder 12, **dadurch gekennzeichnet, dass** das Verfahren nach Schritt f) einen Schritt g) des Beschneidens der Schaufel umfasst, um ihre endgültige Kontur zu bilden, und/oder einen Schritt h) des Anklebens einer Verstärkung auf einen der Ränder des Blattes, um eine Hinterkante (20a) und/oder eine Angriffskante (20b) der Schaufel zu bilden.

14. Verfahren nach einem der Ansprüche 11 bis 13, **dadurch gekennzeichnet, dass** Schritt b) des Verfahrens einen Unterschritt b2) umfasst, der eine Entbindung der Kettfäden, wie im Bereich der Seite einer Hinterkante der Hautvorform, ausführt.

## Claims

1. A fan or propeller vane (1) for an aircraft turbomachine, the vane being made from composite material and comprising a blade (2) and a root (3), the root (3) being formed by a longitudinal end (41) of a spar (4) which is formed by a fibrous reinforcement formed of three-dimensionally woven threads and a portion (42) of which extends inside the blade (2), said blade (2) having an aerodynamic profile defined by a skin (5) formed by woven threads and surrounding said portion (42) of the spar, the spar (4) and the skin (5) being embedded in a polymerized resin, **characterised in that** said portion (42) of the spar comprises protruding longitudinal stiffeners (6) which delimit between them spaces (8) for housing longitudinal inserts (7) formed from a cellular material.

2. The vane according to claim 1, **characterised in that** each of the stiffeners (6) is formed by an unbinding (403) of threads of the spar (4).

3. The vane according to claim 1 or 2, **characterised in that** the transverse thickness of the spar (4) decreases from the root (3) towards the opposite end (43) of the spar.

4. The vane according to one of claims 1 to 3, **characterised in that** the skin (5) comprises an unbinding separating at least partially intrados (50a) and extrados (50b) walls of the blade, in particular at the level of a trailing edge (20b) of the skin.

5. The vane according to one of claims 1 to 4, **characterised in that** the stiffeners (6) are arranged on an intrados face (40a) or an extrados face (40b) of the portion (42) of the spar.

6. The vane according to one of claims 1 to 5, **characterised in that** the spar (4) comprises between two and twelve stiffeners (6) spaced from each other.

7. The vane according to one of the claims 1 to 6, **characterised in that** each stiffener (6) has a variable thickness, in particular between 2 and 5 mm.

8. The vane according to one of claims 1 to 7, **characterised in that** the end (41) forming the root (3) extends outside the skin (5).

9. The vane according to one of claims 1 to 8, **characterised in that** the vane comprises a protective element (90) on one of the edges (20a, 20b) of the blade (2), such as a thermoplastic polyurethane film.

10. The vane according to one of claims 1 to 9, **characterised in that** the cellular material of the longitudinal inserts (7) is an aluminium foam or a metal honeycomb.

11. A method for manufacturing a vane (1) according to any of the preceding claims, the method comprising the steps of:
a) producing a first fibrous preform, referred to as "spar preform" (400), by three-dimensional weaving of threads; said preform (400) comprising both a longitudinal end (41) configured to form a vane root (3) and a portion (42) configured to be inserted inside a vane blade (2);
b) producing a second fibrous preform, referred to as "skin preform", by three-dimensional weaving or braiding of threads; said skin preform being configured to form an aerodynamic profile;
e) arranging the spar preform (400) inside the skin preform;
f) positioning said preforms in a mould, then injecting a thermosetting resin to obtain the vane (1);
**characterised in that** the method comprises, prior to the steps e) and f), the steps consisting in:
a2) forming in the step a) a plurality of longitudinal stiffeners (6) on said portion (42) of the spar, and delimiting spaces (8) between the stiffeners (6),
c) producing longitudinal inserts (7) of cellular material, and d) inserting said inserts (7) into said corresponding spaces (8) of the spar preform (400).

12. The method according to claim 11, **characterised in that** in the step a2) said stiffeners (6) are formed by unbindings (403) of warp threads and by increases of weft threads at the level of said thread unbindings.

13. The method according to claim 11 or 12, **characterised in that** after the step f), the method comprises a step g) of trimming the vane to form its final outline and/or a step h) of bonding a reinforcement to one of the edges of the blade to form a trailing edge (20a) and/or a leading edge (20b) of the vane.

14. The method according to any of claims 11 to 13, **characterised in that** the step b) of the method comprises a sub-step b2) producing an unbinding of the warp threads, such as at the level of the side of a trailing edge of the skin preform.
